(19) Europäisches Patentamt / European Patent Office / Office européen des brevets

(11) **EP 4 520 635 A1**

(12) **EUROPEAN PATENT APPLICATION**

(43) Date of publication:
**12.03.2025 Bulletin 2025/11**

(21) Application number: **24189514.3**

(22) Date of filing: **18.07.2024**

(51) International Patent Classification (IPC):
**B62D 15/02** $^{(2006.01)}$

(52) Cooperative Patent Classification (CPC):
**B62D 15/025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 JP 2023145457**

(71) Applicant: **Suzuki Motor Corporation Shizuoka 432-8611 (JP)**

(72) Inventor: **KONDO, Yuki HAMAMATSU-SHI, 432-8611 (JP)**

(74) Representative: **Plasseraud IP 104 Rue de Richelieu CS92104 75080 Paris Cedex 02 (FR)**

(54) **LANE KEEPING ASSIST DEVICE**

(57) [Problem to be Solved] To provide a lane keeping assist device capable of accurately controlling a lateral acceleration rate so as not to exceed a maximum lateral acceleration rate while suppressing influences of vehicle properties or a surrounding environment.

[Solution] A lane keeping assist device 1 includes: a lane recognition unit 31 that recognizes a lane in which a vehicle is traveling; a target steering angle arithmetic operation unit 32 that performs an arithmetic operation for a target steering angle $\theta a$ for following a target path in the lane; a lane keep control unit 33 that performs steering control based on the target steering angle $\theta a$ so as to keep the vehicle traveling inside the lane and so as not to exceed a maximum lateral acceleration rate set in advance; a lateral acceleration rate acquisition unit 34 that acquires a lateral acceleration rate occurring in the vehicle as a first lateral acceleration rate Ayy; a lateral acceleration rate arithmetic operation unit 35 that performs an arithmetic operation for a lateral acceleration rate based on a steering angle input from a steering angle sensor 24 as a second lateral acceleration rate Ays; and a control adjustment unit 36 that compares the first lateral acceleration rate Ayy with the second lateral acceleration rate Ays and performs adjustment of the steering control based on an index I representing a comparison result.

FIG. 1

**Description**

[Technical Field]

The present invention relates to lane keeping assist device.

[Background Art]

A lane keeping assist device that assists a vehicle to travel near a center of a lane is known. For example, a drive assist device that assists driver's steering operations by changing a steering angle such that a vehicle travels along a target traveling line on which a traveling position of the vehicle is located at a center position between left and right white lines is disclosed in Patent Literature 1. The device described in Patent Literature 1 is configured to control the steering angle such that a lateral acceleration rate of the vehicle does not exceed a maximum lateral acceleration rate during lane keeping control, and is configured to estimate a lateral acceleration rate occurring while the lane keeping control is executed based on a curvature of the target traveling line and a current speed of the vehicle and to generate an alert in a case in which it is expected that the lateral acceleration rate of the vehicle will exceed the maximum lateral acceleration rate.

[Citation List]

[Patent Literature]

[Patent Literature 1] JP 6686873 B2

[Summary of Invention]

[Problem to be Solved by the Invention]

When the lane keeping control is executed, the maximum lateral acceleration rate is set in advance in accordance with the international standards, and it is required to perform control such that the lateral acceleration rate occurring at the time of turning does not exceed the maximum lateral acceleration rate. The lateral acceleration rate occurring in the vehicle is influenced by vehicle properties including a vehicle weight and tire pressures, and a surrounding environment, for example, and thus, the lateral acceleration rate is desired to be accurately controlled regardless of influence by the vehicle properties or the surrounding environment during lane keeping control.
The present invention has been made in view of actual circumstances as described above, and an object thereof is to provide a lane keeping assist device capable of accurately controlling a lateral acceleration rate so as not to exceed a maximum lateral acceleration rate while suppressing influences of vehicle properties or a surrounding environment in lane keeping control.

[Means for Solving the Problem]

According to an aspect of the present invention, a lane keeping assist device includes: a lane recognition unit that recognizes a lane in which a vehicle is traveling; a target steering angle arithmetic operation unit that performs an arithmetic operation for a target steering angle for following a target path in the lane; a lane keeping control unit that performs steering control based on the target steering angle so as to keep the vehicle traveling inside the lane and so as not to exceed a maximum lateral acceleration rate set in advance; a lateral acceleration rate acquisition unit that acquires a lateral acceleration rate occurring in the vehicle as a first lateral acceleration rate; a lateral acceleration rate arithmetic operation unit that performs an arithmetic operation for a lateral acceleration rate based on a steering angle input from a steering angle sensor as a second lateral acceleration rate; and a control adjustment unit that compares the first lateral acceleration rate with the second lateral acceleration rate and performs adjustment of the steering control based on an index representing a comparison result of the first lateral acceleration rate and the second lateral acceleration rate.

[Advantageous Effect of Invention]

The lane keeping assist device according to the present invention can accurately control a lateral acceleration rate so as not to exceed a maximum lateral acceleration rate in lane keeping control.

[Brief Description of Drawings]

[Figure 1] Figure 1 is a block diagram illustrating a schematic configuration of a lane keeping assist device according to an embodiment of the present invention.
[Figure 2] Figure 2 is a flowchart illustrating a flow of lane keeping control according to an embodiment.
[Figure 3] Figure 3 is a flowchart for explaining setting of a weighting coefficient.

[Mode for Carrying Out the Invention]

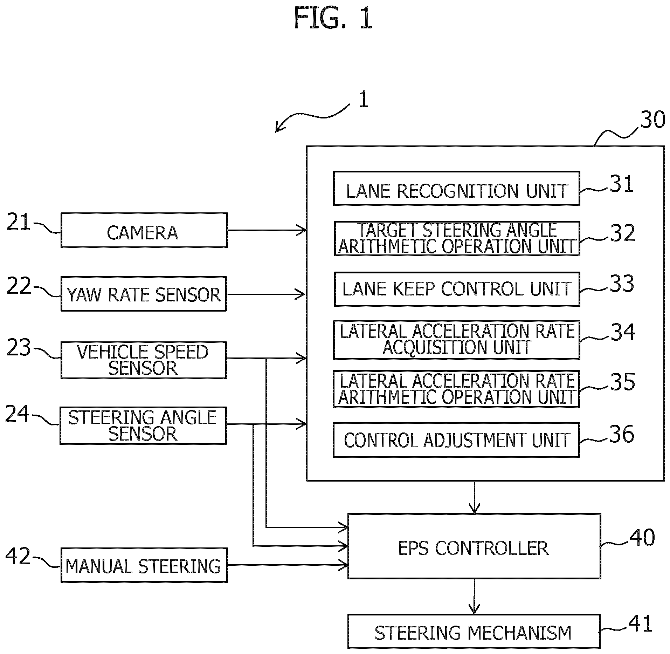

Hereinafter, a lane keeping assist device according to a first embodiment of the present invention will be described in detail with reference to the drawings. Figure 1 is a block diagram illustrating a schematic configuration of the lane keeping assist device according to the present embodiment. The lane keeping assist device is mounted in a vehicle, is adapted to assist driver's driving operations, and is configured to perform steering control such that the vehicle travels while being maintained near a center of a lane.

As illustrated in Figure 1, a lane keeping assist device 1 includes a camera 21 as a front detection means that detects a front region of the vehicle, a yaw rate sensor 22 that detects a yaw rate $\gamma$ of the vehicle, a vehicle speed sensor 23 that detects a speed (vehicle speed) V of the vehicle, a steering angle sensor 24 that detects a steering angle (front wheel steering angle) $\delta$ of the vehicle, and the like. The lane keeping assist device 1 further includes a control device 30, an EPS (electric power steering) controller 40, and the like.

The camera 21 is configured to image the front region of the vehicle using an imaging element and input image data to the control device 30. The camera 21 is configured to be able to detect positions of lane markers on roads that define the lane in which the vehicle itself is traveling and an adjacent lane and presence of and relative distances to obstacles such as other vehicles and people around the vehicle itself.

Signals of the yaw rate $\gamma$ detected by the yaw rate sensor 22, the vehicle speed V detected by the vehicle speed sensor 23, and the steering angle $\delta$ detected by the steering angle sensor 24 are input to the control device 30. Note that the signals of the vehicle speed V detected by the vehicle speed sensor 23 and the steering angle $\delta$ detected by the steering angle sensor 24 are also input to the EPS controller 40.

The control device 30 is configured of a computer including, for example, a ROM that stores programs, data, and the like, a CPU that performs arithmetic operation processing, a RAM that stores dynamic data and arithmetic operation processing results, an input/output interface, and the like. The control device 30 is configured to execute functions of a lane recognition unit 31, a target steering angle arithmetic operation unit 32, a lane keep control unit 33, a lateral acceleration rate acquisition unit 34, a lateral acceleration rate arithmetic operation unit 35, and a control adjustment unit 36 and to perform overall control of the lane keeping assist device 1.

The lane recognition unit 31 is configured to recognize a lane in which the vehicle is traveling (traveling lane). For example, the lane recognition unit 31 performs image processing based on image data of the front region input from the camera 21 and recognizes left and right lane markers (white lines) that define the lane in which the vehicle is traveling. The lane markers include a lane marker between the lane in which the vehicle itself is in and the adjacent lane and a lane marker at a lateral end of the lane in which the vehicle itself is in. Also, the lane recognition unit 31 performs an arithmetic operation for a width of a lane and a center line of the lane passing through a center position between the left and right lane markers from the positions of the left and right lane markers and performs an arithmetic operation for a curvature radius or a curvature (= a reciprocal of the curvature radius) of the road based on the center line of the lane.

The target steering angle arithmetic operation unit 32 is configured to perform an arithmetic operation for a target steering angle $\theta a$ for the vehicle to follow a target path in the lane. For example, the target steering angle arithmetic operation unit 32 sets the center line passing through the center position of the lane obtained through the arithmetic operation by the lane recognition unit 31 as the target path and performs arithmetic operations for the position and the orientation of the vehicle with respect to the center line of the lane. The position of the vehicle is, for example, a distance (lateral displacement) y from the center line of the lane to the position of the center of gravity of the vehicle in a vehicle width direction, and the orientation of the vehicle is, for example, an angle (yaw angle) $\theta y$ formed by a tangential direction of the center line of the lane and a center axis of the vehicle in a front-rear direction. Note that the yaw angle $\theta y$ can also be calculated by integrating the yaw rate $\gamma$ input from the yaw rate sensor 22. The target steering angle arithmetic operation unit 32 calculates the target steering angle $\theta a$ for following the target path based on the position and the orientation of the vehicle.

The lane keep control unit 33 executes lane keeping control. Specifically, the lane keep control unit 33 is configured to perform steering control based on the target steering angle $\theta a$ so as to maintain traveling of the vehicle inside the lane and so as not to exceed the maximum lateral acceleration rate set in advance. For example, the lane keep control unit 33 estimates the orientation and lateral displacement of the vehicle after $\Delta t$ seconds with which the maximum lateral acceleration rate is not exceeded from a relationship between the position and movement properties of the vehicle, that is, between the yaw rate $\gamma$ and the lateral acceleration rate ($d^2y/dt^2$) occurring by a vehicle movement at the front wheel steering angle $\delta$ generated when a steering torque T is given to a steering mechanism 41 during traveling at the vehicle speed V. The lane keep control unit 33 calculates a steering angle command such that the lateral displacement after $\Delta t$ seconds becomes yt and outputs the steering angle command to the EPS controller 40.

The lateral acceleration rate acquisition unit 34 is configured to acquire a lateral acceleration rate (first lateral acceleration rate) Ayy occurring in the vehicle. For example, the lateral acceleration rate acquisition unit 34 can calculate the first lateral acceleration rate Ayy based on (Equation 1) below from the vehicle speed V detected by the vehicle speed sensor 23 and the yaw rate $\gamma$ detected by the yaw rate sensor 22.

$$Ayy = V \times \gamma \quad \cdots (\text{Equation 1})$$

The first lateral acceleration rate Ayy is calculated based on the yaw rate $\gamma$ that is actually occurring in the vehicle, and thus, it may be stated that the first lateral acceleration rate Ayy represents the lateral acceleration that is actually occurring in the vehicle. Note that the yaw rate $\gamma$ is a positive value when the vehicle is turning left and is a negative value when the vehicle is turning right. Similarly, the lateral acceleration rate is a positive value when the vehicle is turning left and the acceleration rate is acting in the right direction of the vehicle, and is a negative value in a case in which the vehicle is turning right and the acceleration rate is acting in the left direction of the vehicle.

The lateral acceleration rate arithmetic operation unit 35 is configured to perform an arithmetic operation for a lateral acceleration rate (second lateral acceleration rate) Ays based on the steering angle $\delta$ input from the steering angle sensor 24. For example, the lateral acceleration rate arithmetic operation unit 35 can calculate the second lateral acceleration rate Ays based on (Equation 2) below.

$$Ays = (\delta \times V^2)/\{(1 + A \times V^2) \times 1\} \quad \cdots (\text{Equation 2})$$

In (Equation 2), V is a vehicle speed detected by the vehicle speed sensor 23, A is a stability factor, and 1 is a wheel base.

The stability factor A is a property value representing a steering property of the vehicle in constant radius turning with a constant rotation angle of a steering wheel, and is a designed value defined based on the wheel base, a front axle weight, front cornering power, a rear axle weight, and rear cornering power. The second lateral acceleration rate Ays is calculated using the stability factor A which is a designed value of the vehicle, and it may be stated that the second lateral acceleration rate Ays represents an ideal lateral acceleration rate that is expected to occur at a certain steering angle $\delta$ in design of the vehicle.

The control adjustment unit 36 is configured to adjust steering control executed by the lane keep control unit 33 based on a comparison result of the first lateral acceleration rate Ayy acquired by the lateral acceleration rate acquisition unit 34 and the second lateral acceleration rate Ays arithmetically operated by the lateral acceleration rate arithmetic operation unit 35. The adjustment of the steering control performed by the control adjustment unit 36 will be described later.

The EPS controller 40 is configured of a computer including, for example, a ROM that stores programs, data, and the like, a CPU that performs arithmetic operation processing, a RAM that stores dynamic data and arithmetic operation processing results, an input/output interface, and the like. The EPS controller 40 is configured to control the steering mechanism 41 based on a steering angle command input from the lane keep control unit 33 or a steering angle command in accordance with manual steering 42 of the steering wheel.

Since a steering reaction force changes depending on the vehicle speed, the EPS controller 40 refers to a steering angle-steering torque map for each vehicle speed stored in a memory, which is not illustrated, acquires a steering torque based on the steering angle command, and outputs a torque command to the steering mechanism 41. The steering mechanism 41 drives an actuator (EPS motor), which is not illustrated, in accordance with the torque command, and the front wheel steering angle $\delta$ is thereby controlled such that the vehicle follows the target path.

As described above, the lane keeping assist device 1 according to the present embodiment is configured to execute, so-called, hands-on lane keeping control of assisting driver's driving operations such that the vehicle keeps traveling near the center of the lane. Here, in a case in which the hands-on lane keeping control is executed, a maximum lateral acceleration rate that is allowed to occur in the vehicle is set in advance in accordance with international standards. In other words, it may be stated that the maximum lateral acceleration rate is a rate of a lateral acceleration which ensures that the vehicle will not deviate from the lane in a case in which the lateral acceleration acts on the vehicle turning at a vehicle speed within a predetermined vehicle speed range. Therefore, it is necessary for the control device 30 to monitor the lateral acceleration rate occurring in the vehicle during execution of the lane keeping control and to perform control such that the lateral acceleration rate occurring particularly when the vehicle turns does not exceed the maximum lateral acceleration rate.

The lateral acceleration rate that is actually occurring in the vehicle is influenced by vehicle properties including a vehicle weight and tire pressures, a surrounding environment, and the like. In other words, there may be a difference between an ideal lateral acceleration rate that is expected to occur in the design of the vehicle and a lateral acceleration rate that actually occurs in the vehicle depending on the vehicle properties, the surrounding environment, and the like. Also, yaw responsiveness of the vehicle at the time of left turning and right turning may differ from one another depending on the vehicle properties, the surrounding environment, and the like, for example, and even if the vehicle travels along curves with the same curvature at the same vehicle speed, different lateral acceleration rates may occur at the time of turning left and at the time of turning right.

Therefore, accurately controlling the lateral acceleration rate occurring in the vehicle so as not to exceed the maximum lateral acceleration rate while suppressing influences of the vehicle properties or the surrounding environment is required during the execution of the lane keeping control.

Thus, the present embodiment is configured such that the first lateral acceleration rate Ayy that is actually occurring during execution of the lane keeping control and the ideal second lateral acceleration rate Ays arithmetically operated from a designed value of the vehicle are compared and the control adjustment unit 36 adjusts steering control performed by the lane keep control unit 33 based on the comparison result. Hereinafter, the adjustment of the steering control performed by the control adjustment unit 36 will be described in detail.

The control adjustment unit 36 compares the first lateral acceleration rate Ayy acquired by the lateral acceleration rate acquisition unit 34 with the second lateral acceleration rate Ays arithmetically operated by the lateral acceleration rate arithmetic operation unit 35 and calculates the comparison result as an index I. The index I is a ratio of the ideal second lateral acceleration rate Ays to the actual first lateral acceleration rate Ayy and can be represented using (Equation 3) below.

$$I = Ays/Ayy \quad \cdots (Equation\ 3)$$

It is possible to understand states of the vehicle as follows depending on the index I. - In a case of the index I = 1

The first lateral acceleration rate Ayy and the second lateral acceleration rate Ays are equal in this state, and this represents that a lateral acceleration rate that is equal to the ideal second lateral acceleration rate Ays expected to occur with respect to a given steering angle $\delta$ is occurring in the vehicle.

- In a case of the index I > 1

The first lateral acceleration rate Ayy is less than the second lateral acceleration rate Ays in this state, and this represents that a lateral acceleration rate that is less than the ideal second lateral acceleration rate Ays is occurring in the vehicle.

- In a case of the index I < 1

The first lateral acceleration rate Ayy is greater than the second lateral acceleration rate Ays in this state, and this represents that a lateral acceleration rate that is greater than the ideal second lateral acceleration rate Ays is occurring in the vehicle.

The control adjustment unit 36 adjusts the steering control so as to cause the index I to approach one. Specifically, the target steering angle $\theta$a arithmetically operated by the target steering angle arithmetic operation unit 32 is adjusted so as to cause the index I to approach one. By performing the steering control based on the adjusted target steering angle $\theta$a, the behavior of the vehicle changes and the lateral acceleration rate occurring in the vehicle is adjusted to approach the ideal second lateral acceleration rate Ays.

The control adjustment unit 36 distinguishes the index I, in a case in which the vehicle is turning left as a left turning index Il, and the index I in a case in which the vehicle is turning right as a right turning index Ir in consideration of the fact that yaw responsiveness of the vehicle may differ during turning left and during turning right as described above. Whether the vehicle is turning left or turning right can be determined based on the front wheel steering angle of the vehicle, the yaw rate occurring in the vehicle, the lateral acceleration rate occurring in the vehicle, or the like, for example. Alternatively, it is also possible to determine whether the vehicle is turning left or turning right based on a curvature of a road arithmetically operated by the lane recognition unit 31 or information regarding a road shape acquired from a map information database, which is not illustrated.

The control adjustment unit 36 adjusts the target steering angle $\theta$al during left turning based on the left turning index Il when the vehicle is turning left and adjusts the target steering angle $\theta$ar during right turning based on the right turning index Ir when the vehicle is turning right.

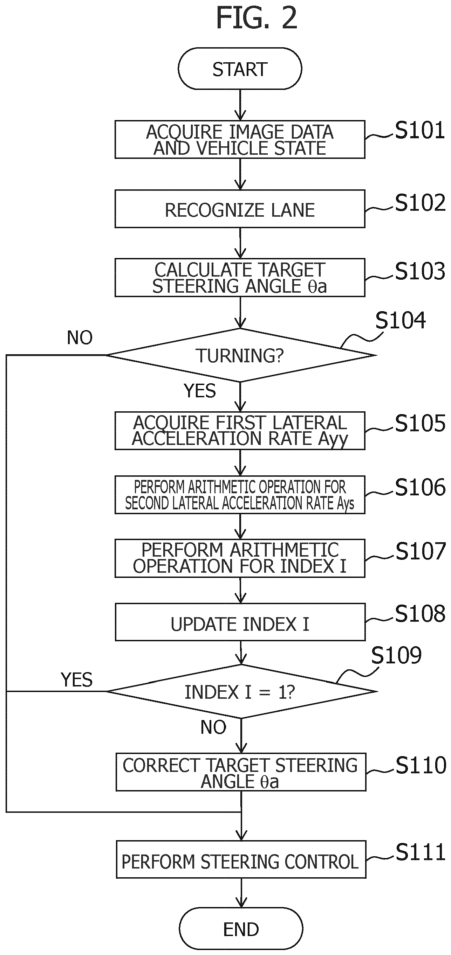

Hereinafter, the adjustment of the steering control according to the present embodiment will be described in detail using the flowchart in Figure 2. The flowchart in Figure 2 illustrates a flow of the lane keeping control in which steering control is performed such that the vehicle travels near the center of the lane. The control device 30 repeatedly executes the processing illustrated in Figure 2 in a predetermined cycle during execution of the lane keeping control and adjusts (corrects) the target steering angle $\theta a$ based on the index I such that the vehicle keeps travelling near the center of the lane without exceeding the maximum lateral acceleration rate during turning. Note that since methods for adjusting the target steering angle $\theta a$ during left turning and during right turning are the same, the following description will be given using the index I and the target steering angle $\theta a$ as representative values of the left turning and the right turning without distinguishing the turning directions for convenience of explanation.

In step S101, the control device 30 acquires image data of the vehicle front region input from the camera 21 and acquires vehicle state data input from the yaw rate sensor 22, the vehicle speed sensor 23, and the steering angle sensor 24. The vehicle state data includes the vehicle speed V, the yaw rate $\gamma$, and the steering angle $\delta$.

In step S102, the lane recognition unit 31 recognizes the lane in which the vehicle is traveling based on the image data input in step S101 and performs arithmetic operations for a center line of the lane and a curvature radius of the road.

In step S103, the target steering angle arithmetic operation unit 32 sets the center line of the lane arithmetically operated in step 102 as a target path and calculates the target steering angle $\theta a$ for following the target path based on the position and the orientation of the vehicle with respect to the target path.

In step S104, it is determined whether the vehicle is turning, and in a case in which the vehicle is turning, it is determined whether the vehicle is turning right or left. In a case in which the vehicle is turning, the processing proceeds to step S105. In a case in which the vehicle is not turning, the processing proceeds to step Sill, and steering control is performed based on the target steering angle $\theta a$ calculated in step S103. Note that the processing in and after step S105 may be configured to be performed even when the vehicle is not turning; however, it is possible to reduce a calculation load of the control device 30 by performing the processing in and after S105 only when the vehicle is turning.

In step S105, the lateral acceleration rate acquisition unit 34 calculates the first lateral acceleration rate Ayy that is actually occurring in the vehicle from (Equation 1) described above based on the vehicle speed V and the yaw rate $\gamma$ acquired in step S101.

In step S106, the lateral acceleration rate arithmetic operation unit 35 performs an arithmetic operation for the second lateral acceleration rate Ays expected to occur with respect to the steering angle $\delta$ from (Equation 2) described above using the steering angle $\delta$ acquired in step S101.

In step S107, the control adjustment unit 36 calculates a ratio of the second lateral acceleration rate Ays to the first lateral acceleration rate Ayy. The ratio calculated here is defined as an index Inew since the ratio is a value newly representing the comparison result between the first lateral acceleration rate Ayy and the second lateral acceleration rate Ays obtained in this cycle.

In step S108, the index I is updated using the index Inew calculated in step S107. Therefore, first, the index I calculated in the previous cycle is set as an index Iold, and an average value of the indices is calculated using the index Iold in the previous cycle and the index Inew newly calculated in step S107. The calculated average value of the indices is set as an index I representing the comparison result between the first lateral acceleration rate Ayy and the second lateral acceleration rate Ays.

Specifically, the index I is updated using (Equation 4) below.

$$I = (n \times Iold + Inew)/(n + 1) \quad \cdots (Equation\ 4)$$

In (Equation 4), n is the number of cycles in the past including the previous cycle, and an appropriate value is set in advance (n = 10, for example). In other words, the index I calculated from (Equation 4) represents a moving average of the indices of (n + 1) cycles. It is possible to expect noise reduction and an improvement in robustness by using the moving average as the index I. Note that when the index I is calculated for the first time in this cycle, it is possible to handle the case on the assumption that the index Iold in the previous cycle = 1, for example. The left turning index Il is calculated in a case in which the vehicle is turning left, and the right turning index Ir is calculated in a case in which the vehicle is turning right.

In step S109, it is determined whether or not the index I calculated in step S108 = 1. In a case in which the index I = 1 is established, the vehicle is in a state in which a lateral acceleration rate that is equal to the second lateral acceleration rate Ays expected to occur with respect to the steering angle $\delta$ is occurring, and thus, correction of the target steering angle $\theta a$ is not performed, and the processing proceeds to step S111. In a case in which the index I = 1 is not established, the vehicle is in a state in which the first lateral acceleration rate Ayy that is actually occurring in the vehicle is less than or is greater than the second lateral acceleration rate Ays, and the first lateral acceleration rate Ayy is either excessively less or is excessively greater than with respect to the second lateral acceleration rate Ays. Thus, the processing proceeds to step S110 so as to adjust (correct) the target steering angle $\theta a$.

In step S 110, the control adjustment unit 36 adjusts the target steering angle $\theta a$ calculated in step S103 so as to bring the index I closer to one. Specifically, a correction value $\theta c$ for the target steering angle $\theta a$ is calculated using the index I from (Equation 5) below.

$$\theta c = \theta a + (\theta a \times (I - 1) \times \eta) \qquad \cdots(\text{Equation 5})$$

In (Equation 5), $\eta$ is a variable coefficient for weighting correction of the target steering angle $\theta a$. The coefficient $\eta$ will be described later.

With the index I > 1, the vehicle is in a state in which the first lateral acceleration rate Ayy that is actually occurring is less than the second lateral acceleration rate Ays. In this case, the correction value $\theta c$ increases by the amount corresponding to ($\theta a \times (I - 1) \times \eta$) as compared with the target steering angle $\theta a$, and as a result, the first lateral acceleration rate Ayy occurring in the vehicle increases and approaches the ideal second lateral acceleration rate Ays.

With the index I < 1, the vehicle is in a state in which the first lateral acceleration rate Ayy that is actually occurring is greater than the second lateral acceleration rate Ays. In this case, the correction value $\theta c$ decreases by the amount corresponding to ($\theta a \times (I - 1) \times \eta$) as compared with the target steering angle $\theta a$, and as a result, the first lateral acceleration rate Ayy occurring in the vehicle decreases and approaches the ideal second lateral acceleration rate Ays. The control adjustment unit 36 sets the correction value $\theta c$ calculated here as the target steering angle $\theta a$.

In step S 111, the lane keep control unit 33 performs steering control based on the target steering angle $\theta a$ calculated in step S103 or the target steering angle $\theta a$ corrected in step S110. Specifically, the lane keep control unit 33 outputs the steering angle command in accordance with the target steering angle $\theta a$ to the EPS controller 40 as described above and controls the steering mechanism 41.

Next, the variable coefficient $\eta$ for weighting will be described. The coefficient $\eta$ is used to adjust a degree of correction of the target steering angle $\theta a$ based on a trend of a change in the index I due to the correction of the target steering angle $\theta a$. In a case in which the index I suddenly changes due to the correction of the target steering angle $\theta a$, for example, the steering angle $\delta$ may significantly change and riding comfort of an occupant may deteriorate. However, when only the riding comfort is valued, it may be difficult to cause the index I to approach one even if the target steering angle $\theta a$ is corrected.

Thus, adjustment of the target steering angle $\theta a$ is performed so as to reduce deterioration of riding comfort while improving followability to quickly approach the index I = 1 by setting the coefficient $\eta$ based on the trend of the change in the index I when the correction value $\theta c$ for the target steering angle $\theta a$ is calculated. Note that the coefficient $\eta$ is multiplied by a difference (I - 1) between the index I and 1 as indicated by (Equation 5) above, and thus, the coefficient $\eta$ may be regarded as a coefficient for weighting the index I.

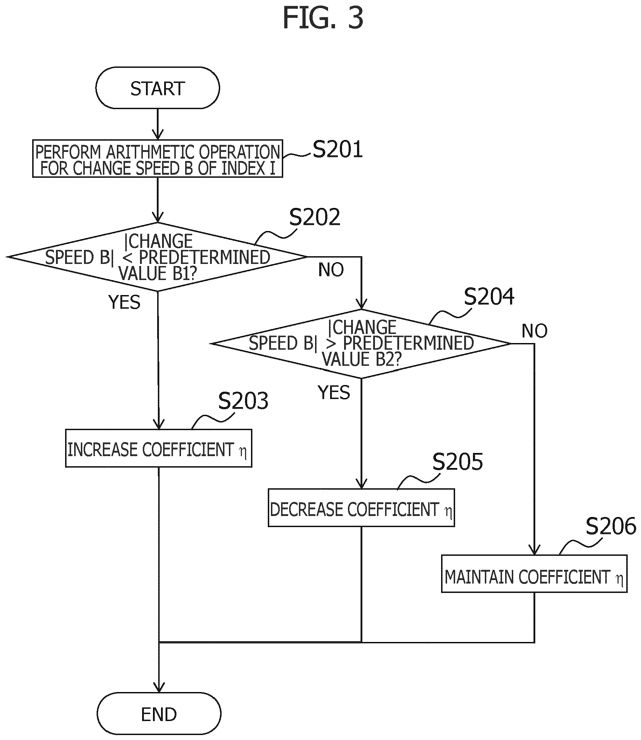

Hereinafter, setting of the coefficient $\eta$ will be described in detail using the flowchart in Figure 3. Note that as the coefficient $\eta$, a coefficient $\eta l$ for the left turning index Il and a coefficient $\eta r$ for the right turning index Ir are independently set. However, since methods for setting the coefficients $\eta$ for the left turning and the right turning are the same, the following description will be given using the coefficient $\eta$ as a representative value of the left and right turning without distinguishing the turning direction for convenience of explanation.

In step S201, an arithmetic operation for the trend of the change in index I is performed. For example, a change speed B of the index I is calculated as the trend of the change in index I. In step S202, it is determined whether or not an absolute value of the change speed B calculated in step S201 is less than a predetermined value B1. The predetermined value B1 is set to an appropriate value in advance in order to determine whether or not the change in index I is slow. In a case in which the absolute value of the change speed B is less than the predetermined value B1 and the change in the index I is slow, the processing proceeds to step S203.

In step S203, the coefficient $\eta$ is increased in consideration of the fact that the change in steering angle $\delta$ is slow and the effect of correcting the target steering angle $\theta a$ is not significantly reflected. The increase rate or the increase amount of the coefficient $\eta$ is set to an appropriate value in advance. For example, the coefficient $\eta$ is updated by increasing the coefficient $\eta$ set in the previous cycle at a predetermined increase rate. Note that in a case in which the update of the coefficient $\eta$ is performed for the first time in this cycle, it is possible to use an initial value (an initial value = 1, for example) as the coefficient $\eta$ in the previous cycle. By increasing the coefficient $\eta$, the amount of correction ($\theta a \times (I - 1) \times \eta$) for the target steering angle $\theta a$ increases so that the degree of the correction of the target steering angle $\theta a$ increases. It is thus possible to improve followability to the index I = 1. It is possible to state that the coefficient $\eta$ is a weighting coefficient for the amount of correction (the amount of adjustment) for the target steering angle $\theta a$.

If it is determined that the absolute value of the change speed B is equal to or greater than the predetermined value B1 in step S202, the processing proceeds to step S204, and it is determined whether or not the absolute value of the change speed B is greater than a predetermined value B2. The predetermined value B2 is a value that is greater than the predetermined value B1 and is set to an appropriate value in advance in order to determine whether or not the index I changes significantly. In a case in which the absolute value of the change speed B is greater than the predetermined value B2 and the index I changes significantly, the processing proceeds to step S205.

In step S205, the coefficient $\eta$ is decreased in consideration of the fact that the steering angle $\delta$ has changed

significantly due to the correction of the target steering angle $\theta a$ and riding comfort may have deteriorated. The decrease rate or the decrease amount of the coefficient $\eta$ is set to an appropriate value in advance. For example, the coefficient $\eta$ is updated by adjusting the coefficient $\eta$ set in the previous cycle at a predetermined decrease rate. By decreasing the coefficient $\eta$, the amount of correction ($\theta a \times (I - 1) \times \eta$) for the target steering angle $\theta a$ decreases so that it is possible to reduce the degree of correction of the target steering angle $\theta a$.

In a case in which it is determined, in step S204, that the absolute value of the change speed B is equal to or greater than the predetermined value B1 and equal to or less than the predetermined value B2 and the index I changes at an appropriate speed, the processing proceeds to step S206. In step S206, it is determined that the steering angle $\delta$ has smoothly changed due to the correction of the target steering angle $\theta a$, and the coefficient $\eta$ is maintained.

The lane keeping assist device 1 according to the present embodiment described above can achieve the following operational advantages.

(1) A lane keeping assist device 1 includes: a lane recognition unit 31 that recognizes a lane in which a vehicle is traveling; a target steering angle arithmetic operation unit 32 that performs an arithmetic operation for a target steering angle $\theta a$ for following a target path in the lane; a lane keep control unit 33 that performs steering control based on the target steering angle $\theta a$ so as to keep the vehicle traveling inside the lane and so as not to exceed a maximum lateral acceleration rate set in advance; a lateral acceleration rate acquisition unit 34 that acquires a lateral acceleration rate occurring in the vehicle as a first lateral acceleration rate Ayy; a lateral acceleration rate arithmetic operation unit 35 that performs an arithmetic operation for a lateral acceleration rate based on a steering angle $\delta$ input from a steering angle sensor 24 as a second lateral acceleration rate Ays; and a control adjustment unit 36 that compares the first lateral acceleration rate Ayy with the second lateral acceleration rate Ays and performs adjustment of the steering control based on an index I representing a comparison result of the first lateral acceleration rate Ayy and the second lateral acceleration rate Ays.

The lateral acceleration rate that is actually occurring in the vehicle is influenced by vehicle properties including the vehicle weight and tire pressures, a surrounding environment, and the like. Considering the above, the steering control is adjusted based on the index I representing a comparison result between the first lateral acceleration rate Ayy that is actually occurring in the vehicle and the second lateral acceleration rate Ays that is expected to occur in design based on the steering angle $\delta$, and as a result, it is possible to accurately control the lateral acceleration rate so as not to exceed the maximum lateral acceleration rate while suppressing influences of the vehicle properties, the surrounding environment, and the like.

(2) The control adjustment unit 36 calculates a ratio of the second lateral acceleration rate Ays to the first lateral acceleration rate Ayy as the index I representing the comparison result. In this manner, it is possible to represent the comparison result as a non-dimensional index I and to easily grasp the state of the lateral acceleration rate.

(3) The control adjustment unit 36 is configured to adjust the target steering angle $\theta a$ so as to bring the index I closer to one in a case in which the index I is not one. The target steering angle $\theta a$ is corrected in a case in which the index I = 1 is not established and the first lateral acceleration rate Ayy that is actually occurring in the vehicle is either excessively less or is excessively greater than with respect to the ideal second lateral acceleration rate Ays. The EPS controller 40 performs torque control of a steering mechanism 41 to achieve the target steering angle $\theta a$ after the correction.

(4) The control adjustment unit 36 is configured to set a variable coefficient $\eta$ for weighting the amount of adjustment for the target steering angle $\theta a$. It is possible to improve followability to obtain the index I = 1 and to reduce an acute change in the vehicle behavior due to a change in the target steering angle $\theta a$ by weighting the amount of adjustment (the amount of correction) for the target steering angle $\theta a$ using the variable coefficient $\eta$.

(5) The control adjustment unit 36 calculates a change speed B of the index I, and changes the coefficient $\eta$ in accordance with the change speed B of the index I. The weighting of the amount of adjustment (the amount of correction) for the target steering angle $\theta a$ is changed in accordance with the change speed B of the index I, that is, a trend of the change. Thus, the amount of correction for the target steering angle $\theta a$ can be adjusted to improve followability to the index I = 1 in a state in which it is difficult to bring the index I closer to one, such as in a situation in which the curvature radius of the road is not constant, for example. Also, the amount of correction for the target steering angle $\theta a$ can be adjusted to reduce deterioration of a sensation of a passenger due to a change in the vehicle behavior in a case in which the index I suddenly changes.

(6) The index I calculated by the control adjustment unit 36 includes a left turning index Il that is a ratio of the second lateral acceleration rate Ays to the first lateral acceleration rate Ayy during left turning of the vehicle and a right turning index Ir that is a ratio of the second lateral acceleration rate Ays to the first lateral acceleration rate Ayy during right turning of the vehicle. The control adjustment unit 36 sets, as the coefficient $\eta$, a left turning coefficient $\eta l$ in accordance with a change speed of the left turning index Il and a right turning coefficient $\eta r$ in accordance with a change speed of the right turning index Ir. By calculating the left turning index Il and the right turning index Ir and the left turning coefficient $\eta l$ and the right turning coefficient $\eta r$, respectively, it is possible to accurately control the lateral acceleration rate occurring in the vehicle even in a case in which yaw responsiveness of the vehicle differs at the left turning and at the right turning due to the vehicle properties, the surrounding environment, or the like.

(7) The control adjustment unit 36 is configured to adjust the steering control in a case in which the vehicle is turning, and it is possible to accurately control the lateral acceleration rate so as not to exceed the maximum lateral acceleration rate during turning.

Modifications

(1) In the aforementioned embodiment, the lateral acceleration acquisition unit 34 calculates the first lateral acceleration rate Ayy occurring in the vehicle from the vehicle speed V and the yaw rate $\gamma$. However, the present invention is not limited thereto and may be configured such that a lateral acceleration sensor directly acquires the first lateral acceleration rate Ayy occurring in the vehicle.

(2) In the aforementioned embodiment, the ratio of the second lateral acceleration rate Ays to the first lateral acceleration rate Ayy is calculated as the index I representing the comparison result of comparing the first lateral acceleration rate Ayy with the second lateral acceleration rate Ays. However, the present invention is not limited thereto, and for example, a difference between the first lateral acceleration rate Ayy and the second lateral acceleration rate Ays may be calculated as the index I of the comparison result.

(3) Although the average value of the calculated indices is set as the index I in the aforementioned embodiment, the present invention is not limited thereto, and the calculated index Inew may be used as it is as the index I.

(4) Although it is determined whether or not the index I = 1 is established in step S109 in the above flowchart in Figure 2, it may also be determined whether or not the index I is within a predetermined range including one. In particular, in a case in which the calculated index Inew is used as it is as the index I, an effect of reducing noise and the like may be expected by performing the correction of the target steering angle θa depending on whether or not the index I is within the predetermined range.

Although several embodiments of the present invention have been described above, the present invention is not limited to the above embodiments, and various further modifications and changes can be made within the scope of the present invention as additional remarks.

[Reference Signs List]

1 Lane keeping assist device

24 Steering angle sensor

31 Lane recognition unit

32 Target steering angle arithmetic operation unit

33 Lane keep control unit

34 Lateral acceleration rate acquisition unit

35 Lateral acceleration rate arithmetic operation unit

36 Control adjustment unit

Claims

1. A lane keeping assist device comprising:

a lane recognition unit that recognizes a lane in which a vehicle is traveling;
a target steering angle arithmetic operation unit that performs an arithmetic operation for a target steering angle for following a target path in the lane;
a lane keep control unit that performs steering control based on the target steering angle so as to keep the vehicle traveling inside the lane and so as not to exceed a maximum lateral acceleration rate set in advance;
a lateral acceleration rate acquisition unit that acquires a lateral acceleration rate occurring in the vehicle as a first lateral acceleration rate;
a lateral acceleration rate arithmetic operation unit that performs an arithmetic operation for a lateral acceleration rate based on a steering angle input from a steering angle sensor as a second lateral acceleration rate; and
a control adjustment unit that compares the first lateral acceleration rate with the second lateral acceleration rate and performs adjustment of the steering control based on an index representing a comparison result of the first lateral acceleration rate and the second lateral acceleration rate.

2. The lane keeping assist device according to claim 1, wherein the control adjustment unit calculates a ratio of the second lateral acceleration rate to the first lateral acceleration rate as the index representing the comparison result.

3. The lane keeping assist device according to claim 2, wherein the control adjustment unit is configured to adjust the target steering angle so as to bring the index closer to one in a case in which the index is not one.

4. The lane keeping assist device according to claim 3, wherein the control adjustment unit is configured to set a variable coefficient for weighting an amount of adjustment for the target steering angle.

5. The lane keeping assist device according to claim 4, wherein
the control adjustment unit

calculates a change speed of the index, and
changes the coefficient in accordance with the change speed of the index.

6. The lane keeping assist device according to claim 5, wherein:

the index calculated by the control adjustment unit includes a left turning index that is a ratio of the second lateral acceleration rate to the first lateral acceleration rate during left turning of the vehicle and a right turning index that is a ratio of the second lateral acceleration rate to the first lateral acceleration rate during right turning of the vehicle; and
the control adjustment unit sets, as the coefficient, a left turning coefficient in accordance with a change speed of the left turning index and a right turning coefficient in accordance with a change speed of the right turning index.

7. The lane keeping assist device according to any one of claims 1 to 6, wherein the control adjustment unit is configured to adjust the steering control in a case in which the vehicle is turning.

# FIG. 1

1

30

| LANE RECOGNITION UNIT | 31 |

21 CAMERA → TARGET STEERING ANGLE ARITHMETIC OPERATION UNIT | 32

22 YAW RATE SENSOR → LANE KEEP CONTROL UNIT | 33

23 VEHICLE SPEED SENSOR → LATERAL ACCELERATION RATE ACQUISITION UNIT | 34

LATERAL ACCELERATION RATE ARITHMETIC OPERATION UNIT | 35

24 STEERING ANGLE SENSOR → CONTROL ADJUSTMENT UNIT | 36

42 MANUAL STEERING → EPS CONTROLLER | 40

STEERING MECHANISM | 41

# FIG. 2

START

ACQUIRE IMAGE DATA AND VEHICLE STATE — S101

RECOGNIZE LANE — S102

CALCULATE TARGET STEERING ANGLE θa — S103

TURNING? — S104

NO

YES

ACQUIRE FIRST LATERAL ACCELERATION RATE Ayy — S105

PERFORM ARITHMETIC OPERATION FOR SECOND LATERAL ACCELERATION RATE Ays — S106

PERFORM ARITHMETIC OPERATION FOR INDEX I — S107

UPDATE INDEX I — S108

INDEX I = 1? — S109

YES

NO

CORRECT TARGET STEERING ANGLE θa — S110

PERFORM STEERING CONTROL — S111

END

# FIG. 3

START

PERFORM ARITHMETIC OPERATION FOR CHANGE SPEED B OF INDEX I — S201

S202

|CHANGE SPEED B| < PREDETERMINED VALUE B1?

YES / NO

S204

|CHANGE SPEED B| > PREDETERMINED VALUE B2?

YES / NO

S203

INCREASE COEFFICIENT $\eta$

S205

DECREASE COEFFICIENT $\eta$

S206

MAINTAIN COEFFICIENT $\eta$

END

Europäisches
Patentamt

European
Patent Office

Office européen
des brevets

# EUROPEAN SEARCH REPORT

**Application Number**

EP 24 18 9514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/192383 A1 (NATH NITENDRA [US]) 18 June 2020 (2020-06-18) | 1,7 | INV. B62D15/02 |
| A | * paragraphs [0013], [0015], [0016], [0023], [0027] - [0031], [0044]; claims; figures * | 2-6 | |
| | ----- | | |
| Y | JP H01 182129 A (FUJI HEAVY IND LTD) 20 July 1989 (1989-07-20) | 1,7 | |
| A | * abstract; claims; figures * | 2-6 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 29 January 2025 | Ducher, Alban |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 9514

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | Publication date | Patent family member(s) | Publication date |
|---|---|---|---|
| US 2020192383 A1 | 18-06-2020 | CN 111301392 A<br>DE 102019134050 A1<br>US 2020192383 A1 | 19-06-2020<br>18-06-2020<br>18-06-2020 |
| JP H01182129 A | 20-07-1989 | JP 2630609 B2<br>JP H01182129 A | 16-07-1997<br>20-07-1989 |

EPO FORM P0459

For more details about this annex : see Official Journal of the European Patent Office, No. 12/82

**EP 4 520 635 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6686873 B